Europäisches Patentamt

European Patent Office

Office européen des brevets

(19)

(11) Publication number: **0 338 770**
**A2**

(12) **EUROPEAN PATENT APPLICATION**

(21) Application number: **89303817.4**

(22) Date of filing: **18.04.89**

(51) Int. Cl.⁴: **G06F 15/20**

(30) Priority: **18.04.88 US 182653**

(43) Date of publication of application:
**25.10.89 Bulletin 89/43**

(84) Designated Contracting States:
**BE CH ES FR GB IT LI**

(71) Applicant: **WESTINGHOUSE ELECTRIC CORPORATION**
**Westinghouse Building Gateway Center**
**Pittsburgh Pennsylvania 15222(US)**

(72) Inventor: **Vichare, Ramakant Ganapatrao**
**1164 Colgate Drive**
**Monroeville, PA 15146(US)**
Inventor: **Simmons, Walter Dupree**
**1216 Holy Cross**
**Monroeville, PA 15146(US)**
Inventor: **Groth, Richard Blair**
**402 Washington**
**Jeannette, PA 15644(US)**

(74) Representative: **van Berlyn, Ronald Gilbert**
**23, Centre Heights**
**London, NW3 6JG(GB)**

(54) **System for generating purchasing document.**

(57) A system for generating purchasing documents in a mainframe computer 1, such as a Walker system, having rigid coded input requirements, includes personal computer 7 which permits the user to input data on a CRT screen 11 in a format that emulates the forms and processes which the user understands without making changes to the mainframe system. User adapted rule based lists 103 for certain entries are presented in user readable form in a window 109 overlaid on the screen 11. User selection from the list 61 automatically results in encryption of the selection into the mainframe code, and insertion of the entry into the display. Templates 65, 67 for repetitively used documents speed up document production. The stand alone personal computer 7 frees the users from the operational constraints of the mainframe system 1.

EP 0 338 770 A2

FIG.1A

FIG.1B

## SYSTEM FOR GENERATING PURCHASING DOCUMENT

This invention is directed to a computer system for generating purchasing documents such as purchase orders and requisitions. More particularly, it relates to a user friendly personal computer system which generates purchasing documents through a mainframe computer system having rigid input requirements.

Large mainframe software systems which serve many users typically have very stringent input requirements. This includes mainframe purchasing systems. An example of such mainframe purchasing software is the Walker system which consists of a set of programs residing in a central computer and providing a standard for purchasing, receiving and accounting department data entry.

The Walker system is a very powerful software system which provides centralized integrated purchasing, receiving and related accounting control for a large organization with multiple units. However, like most mainframe systems that serve many users, the Walker system requires that the user input information in a very controlled and rigid format. Seldom does this format match the methods and techniques that a user is already accustomed to using.

Furthermore, the Walker system has requirements beyond those of previous systems. In the short term, the user spends a great deal of time and energy learning to serve the Walker system. It takes months of experience before many people become comfortable with it.

Another major problem with a mainframe system such as the Walker system is that it imposes numerous limitations on the user. For example, users can only access the system when the mainframe is operational. Thus, whenever there is a problem with the mainframe computer or maintenance is being conducted, the user is unable to do his or her job. The major problem, however, is that it is extremely difficult to make changes to the Walker system. The services of a skilled programmer are required to make even minor modifications.

Software systems are available which provide look-up tables or lists on screens of typical choices available for entry where requested by a program. However, the known systems are little more than a convenient implementation of a manual look-up system. The user must type in the information chosen from the list and typically such lists are fixed. In addition, if the requested information is encoded, the exact coded information required must be listed, together with user understandable identification of the encoded information or else the user must learn the code.

It is the object of the invention, therefore, to provide a system which allows users to input data on a complex mainframe system such as the Walker system in a format that emulates the forms and processes which the user understands, and which does so without requiring changes in the mainframe package itself.

This need and others are satisfied by a system for generating purchasing documents in a mainframe computer having rigid coded input requirements which includes a personal computer which interacts with the user in a form understandable to the user to generate a completely new purchasing document or one derived from an easy to use template, and which then transforms the document created into the rigid coded format of the mainframe system.

More particularly, the personal computer presents on a visual display screen suggested items for a purchasing document some of which require user entries. For certain indicated items requiring user entry, a list of selectable entries for the indicated item is presented in user readable form in a box on the display screen adjacent the item. User selection of an entry results in display of that selection at the indicated location in the user readable form from the list and generation for entry into the mainframe computer of a corresponding entry coded to the rigid input requirements of the mainframe system. This coded entry is stored for transmittal to the mainframe computer at a convenient time, thus freeing the user from the operational schedule of the mainframe computer.

This invention has the advantage that for some items, a list of selectable items generated at installation is presented within a window which remains on the display screen. For other items, a rule base list of items, which can be customized to a location or user, is presented within a removable window which is overlaid on the screen. The removal window is placed such that adjacent items remain substantially visible so that the user remains oriented while making the particular selection. The rule base lists are programmable. Manual entries inserted by a user in place of a selectable entry from such a list are automatically added to the list. Selection of an entry from a rule based list not only enters the item on the screen and generates a corresponding coded entry for the mainframe, but also removes the removable window from the screen.

The system has the further advantage in that it also provides for more efficient generation of commonly used documents, by offering the user the capability of generating templates from any previously generated documents. The template is formatted by assigning a user identifiable name to it and by designating which of the user supplied entries to the previous document are to be retained and which are to be left blank when a template is called up. The user fills in the remaining blank items as required for the document being generated. The list of the templates available is presented to the user in one of the removable windows.

The invention will become more readily apparent from the following description of the preferred embodiment thereof, shown by way of example only, in the accompanying drawings wherein:

Figures 1A and B when placed side by side illustrate a digital computer based system in accordance with the invention for generating purchasing documents.

Figures 2, 3 and 4 are user screen presentations illustrating the generation of a portion of a purchasing document in accordance with the invention.

Figure 5 is a screen presentation illustrating the selection of a template document as provided by the invention.

Figure 6 is a flow diagram of the routine which provides for generating entries from rule based lists presented in a window overlaid on the user screen.

The invention will be described as applied to a Walker purchasing document generating system, but it will be understood that the principles disclosed have applications to other large scale, multiple location, mainframe document generating systems which have rigid input requirements.

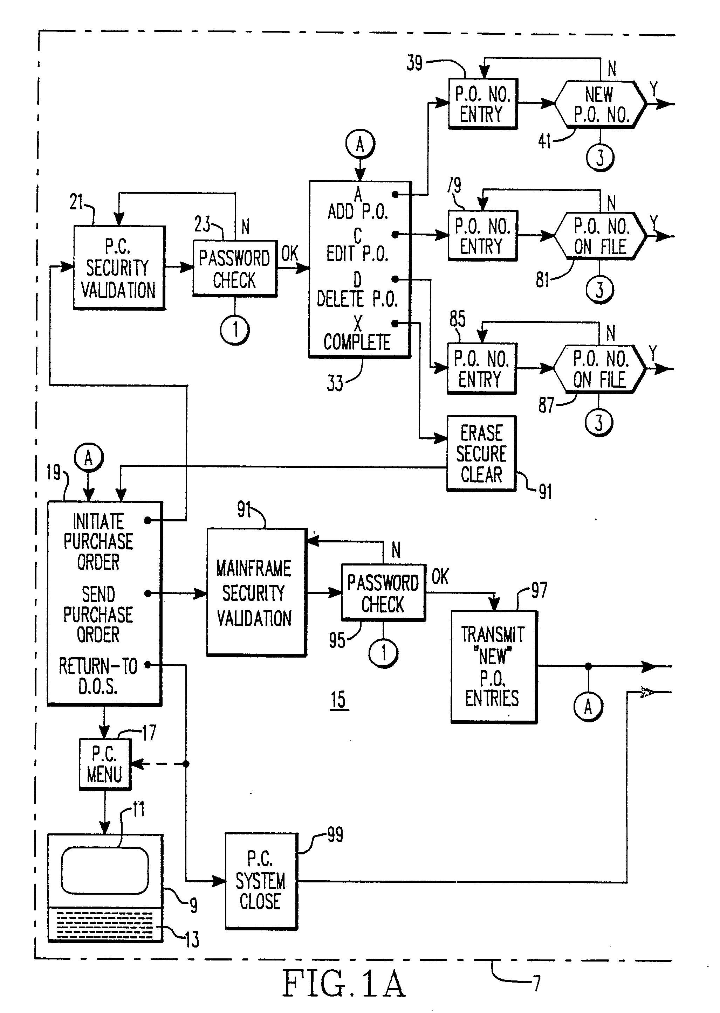

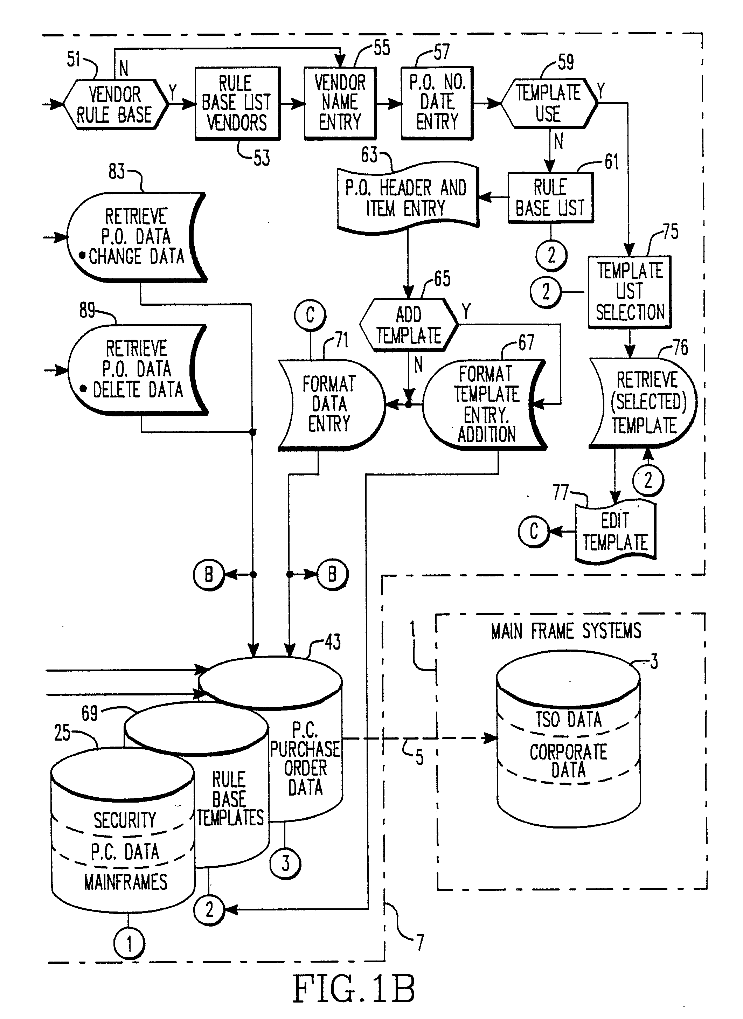

The Walker system, resident in the mainframe computer indicated in Figures 1A and B at 1, is a widely used system for generating purchasing documents such as purchase orders and requisitions. It provides a centralized purchasing system for a large organization with numerous units which may, but not necessarily, be widely separated geographically. The Walker system presents to the user on a video screen at each location a form of the document to be generated, and sequentially provides prompts to the user indicating locations where information is required to complete the form. The necessary information must be supplied by the user in the format and code required by the Walker system. Generally, the coded information is not in a form easily recognized or recalled by the user. Thus, the user finds it necessary to look up the required coded information in a manual, which is time consuming.

The Walker system permits the user to call up a previously generated document so that a similar document can be created. However, this requires the user to remember or record the identification, such as the encoded document number, of a suitable earlier prepared document. The user must then replace entries made in the previously generated document with the information derived in the new document; again, after looking up appropriate codes.

A particularly bothersome aspect of the Walker system is that it can only be accessed when the mainframe is operational, usually during working hours in the locality of the mainframe computer. This can be very inconvenient for users of the system in other time zones.

The present invention encompasses a unique system by which a complex procurement process resident in a mainframe computer and having rigid input requirements is transformed onto a user friendly personal computer system. The resultant system provides accurate order placement uninterrupted by text and code look-ups. This is accomplished through rule base screen integration of typical choices for items requiring user selection, with the list of choices customized for the particular user or situation. The user selection is not only indicated on the screen, but is automatically encoded into the Walker format, and stored for input into the mainframe computer system. The system also bundles contracts into template, or model copies, for quick entry of standard type orders.

Returning to Figures 1A and B, the mainframe system in which the Walker system is resident includes memory 3 which stores data in the Walker format, designated as CORPORATE DATA, for generating the purchasing documents. Memory 3 also stores time sharing operation (TSO) data associated with the communication link 5 between the mainframe system and the stand alone personal computer systems 7. For clarity, only one personal computer (P.C.) system 7 is shown in Figure 1, but it is to be understood that multiple PC systems 7 located throughout the organization using the Walker system, may be connected to the mainframe system 1 by a communication link 5.

Each PC system 7 includes a personal computer 9 having a screen 11, a keyboard 13 or other user input device, and a program system 15. The PC program system 15 menu 17 includes a main menu 19 for generating procurement documents. The main menu 19 offers the following selections:

1. Initiate Purchase Order
2. Send Purchase Order
3. Return to D.O.S. (disk operating system)

If the user selects "INITIATE PURCHASE ORDER", a security clearance for entry into the P.C. system is initiated by asking the user for a password at 21 which is validated at 23 with PC security data stored on a security memory disc 25. The retrieval of the information from the security disc 25 is indicated by the tags "1" at 23 and 25. If the password is not validated, the user is given another opportunity to enter a valid password.

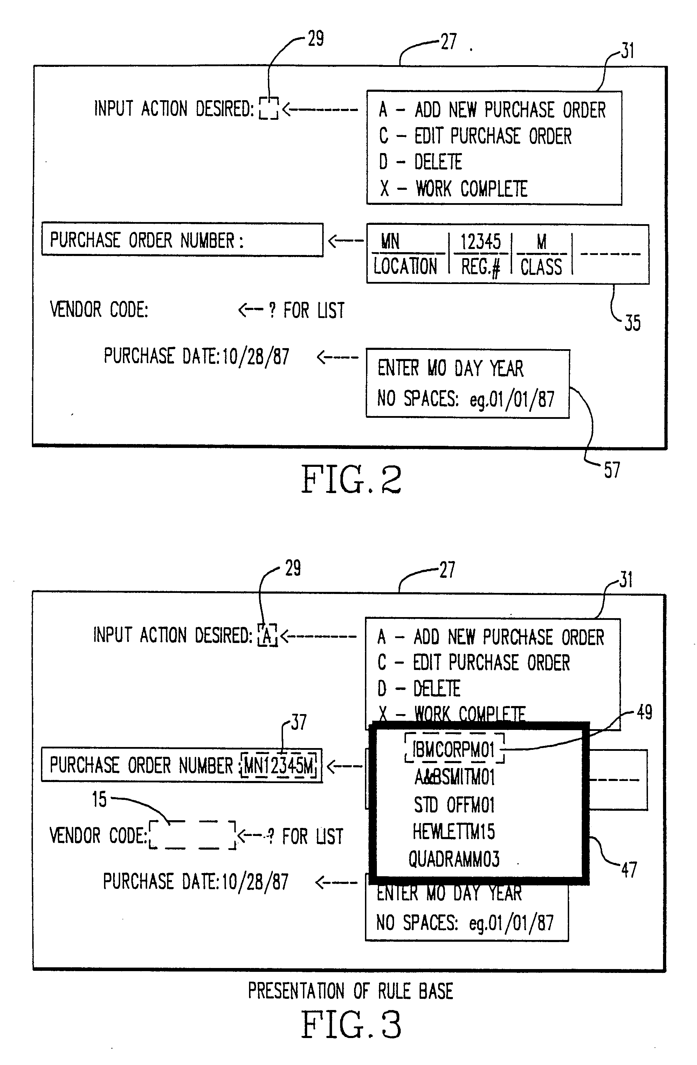

Upon validation of the password, the first screen for generating the purchase order document is presented to the user. An exemplary screen 27 is shown in Figure 2. Successively presented screens systematically guide the user in providing information needed to generate the desired purchase order.

As shown in Figure 2, the first request is for the type of action desired. A cursor in the form of a flashing block 29 indicates the item which is to be specified. A permanent window 31 adjacent the block lists the available choices in reader understandable form, in this case text, and provides a coded symbol to be entered by the user through the keyboard. Assuming the user selects "add new purchase order", an "A" appears in reverse video in place of the flashing cursor in the first line as shown in Figure 3. Selection of the desired action is indicated at block 33 of the software flow diagram shown in Figure 1.

The second item of information requested is the purchase order number as shown on the screen of Figures 2-4. A permanent window 35 adjacent the inquiry displays the required format. In this example, the purchase order number comprises three parts: (1) the location initiating the purchase order; (2) the requisition number; and (3) the class number. The location code, MN in the example, is presented in the window since it will be the same for all purchase orders generated at a given location. The requisition number is provided on the requisition from which the purchase order is generated, and the class code indicates the type of purchase order. The operator inserts the purchase order number as indicated at 37 in Figure 3.

As shown in the flow diagram of Figure 1, the purchase order number entered at 39 is checked at 41 against previous purchase order numbers stored in a purchase order data memory disc 43. The encircled numerals 3 indicate the information flow. Since a new purchase order is being generated, the operator is notified if the selected number is already on file so that a unique number can be identified.

Following valid entry of a purchase order number, the next item on the screen is a request for a vendor code as indicated by the flashing cursor 45 in Figure 3. If the user knows the vendor code, it can be typed in directly. If not, the "?" key is pressed to call up a list of vendors which appear in the heavily outlined window 47 which is overlaid on the screen. Within the window 47 is a list of vendors. The list presented, in user readable form, can be customized for each user or location. The user selects a vendor by use of an arrow key or other indexer on the keyboard which, for instance, highlights the selected entry by use of reverse video as indicated at 49. While only five vendors are presented at a time in the exemplary system, additional groups of five vendors can be called up by advancing the highlighted block beyond the list shown.

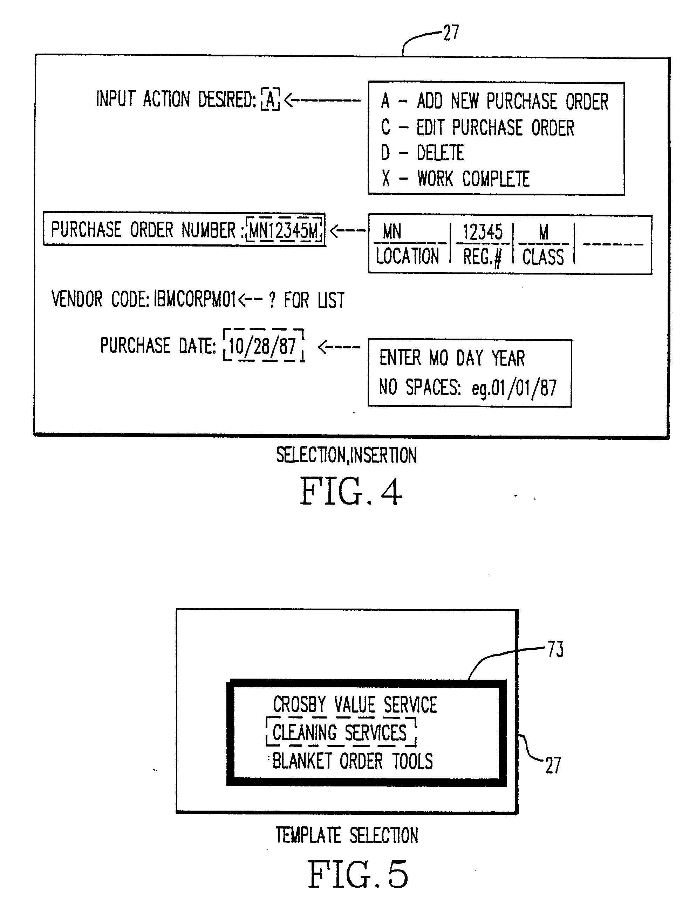

Entry of the vendor selection, by the user, performs several functions. It encrypts the vendor code into the Walker format and stores the coded entry on the P.C. purchase order data memory disc 43. For a vendor selected from the list, it also inserts the vendor identification in the user readable form of the list into the space occupied by the flashing cursor 45 as shown in Figure 4. Finally, entry of a vendor selected from the list removes the window 47 from the screen as shown in Figure 4. This process of selecting the vendor is shown at blocks 51, 53 and 55 in Figure 1. If the user types in a vendor at 51 rather than selecting one from the list presented in the window, this new vendor is automatically added to the list. Selection of a vendor from the list is indicated at block 53. Entry of the typed in or listed vendor identification is indicated at 55.

The next piece of information requested is the date, as indicated at block 57 in Figure 1. The current date is automatically presented on the screen as shown in Figures 2-4. This date can either be accepted or a different date can be typed in.

The user is then asked at block 59 whether he or she wishes to use a template. If use of a template is not desired, the user is presented with additional screens some of which include additional rule base lists as indicated at 61. These additional lists are presented within a window overlaid on the screen in the manner described above in connection with the vendor list. Again, selection of an item can be made from the list or can be typed in directly. Entry of the selected item inserts it into the screen, encrypts the selection in the Walker format and removes the selection window, as in the case of the vendor list. In the exemplary systems, additional rule base lists are provided for delivery location and the class of purchase order, however, it is evident that such flexible, user friendly lists can be provided for many types of information needed to complete a purchase order.

In addition to information selected from the rule base lists, numerous other requests for information are sequentially presented on the screen. Some of these may be rejected by the user if they are not pertinent to the purchase order being generated. These additional requests for information could also, where appropriate, be accompanied by fixed lists such as demonstrated above in connection with the function selections at block 33 in Figure 1. Such additional entry of information is indicated at block 63 in Figure 1.

When entry of information for the purchase order is completed, the user is asked at block 65 if the purchase order just constructed should be used as a template for generating future purchase orders. If so, the template is formatted and given an identifying label at 67, and is stored in the P.C. template memory disc 69. Whether the newly constructed purchase order is used as a template or not, the information gathered is formatted at block 71 for entry into the P.C. purchase order data memory disc 43.

The template feature of the program greatly speeds up generation of standard types of purchase orders. In order to provide the capability of generating a wide variety of purchase orders, the program necessarily requests information required to provide this flexibility. However, most specific purchase orders do not require all of this information. The template feature permits the user to store selected purchase order forms as models containing just the terms required for a particular type of purchase order.

If the user requests a template at 59, a rule base list of the templates available is presented in a window 73 on the screen as indicated in Figure 5. The list contains the identification selected for the template by the user when the template was created at block 67. The templates may be general such as a blanket order applicable for different types of items, or specific, such as an order for a certain vendor to perform a specific service on a specific piece of equipment. The degree of generality or specificity is selected by the user. The user selects the template identifier accordingly.

The user selects the desired template at 75 from a user prepared list in the same manner as described above in connection with vendor selections. Entry of the selection results in retrieval of the template at block 76 from the template storage disc. The retrieved template includes the information selected at creation for inclusion into the model purchase order. This can include fixed entries for items which the user would had to have selected had a template not been used. For instance, in certain types of purchase orders, the delivery location and the terms of payment may be the same for every such order, so that such standard information is presented by the template.

The information contained in the template is presented to the user who can edit the proposed purchase order by adding the required information not pre-entered, and/or if desired, changing the presented information as indicated at block 77. This editing does not modify the template; only the current purchase order being generated. As indicated by the tags labeled "C" in Figure 1, the purchase order generated from the template, is formatted at block 71 for entry in the P.C. purchase order data base 43.

Upon entry of purchase order information into the P.C. purchase order data base 43, the program, as indicated by the tags "B" in Figure 1, returns to the presentation on the user screen of the actions available in block 33.

The second action available to a user, as indicated in block 33, is to edit a previously generated purchase order which is stored on the P.C. purchase order memory disc, but which has not yet been transmitted to the Walker system in the mainframe computer. Upon selection of this option by entering "C" in the space provided in the screen (see Figure 2), the user is requested to enter the number of the purchase order to be edited at block 79. The memory 43 is checked for this purchase order at block 81 with the flow of the information indicated by the tags "3". If no such purchase order number is stored in memory 43, the user is requested to reenter the desired number.

Once a valid purchase order number is entered, the designated purchase order is retrieved from memory 43 in block 83 and sequentially presented on the screen so that the user can make any desired changes. The edited purchase order is returned to memory 43 and the program reverts to block 33.

If the user desires to delete a purchase order, the letter "D" is entered as the action code as indicated in block 33. If the number of the purchase order selected in block 85 is on file, as indicated in block 87, the information is retrieved from memory 43 and deleted in block 89. The program again returns to block 33.

If the user selects in block 33, action code "X", indicating work is completed, the P.C. security clearance is erased at block 91 and the program returns to the main menu at 19.

One of the advantages of the present system is that purchase order documents can be composed on the P.C.'s 7, independently of the operational status of the mainframe system 1. The information required to generate a document is stored on the P.C. purchase order data memory disc 43 for transmission to the Walker system on command. Thus, the users are not compelled to adjust their work schedules to the operational schedule of the mainframe computer system 1.

When it is desired to transmit the stored purchase order information to the mainframe system 1, the user selects "SEND PURCHASE ORDER" from the main menu at 19. The user is required at 93 to enter a password to enter the mainframe which is checked at 95 against the password stored in the security memory disc 25. Once the security check is passed, all the "new" purchase order entries stored in memory 43 are transmitted to the mainframe system 1, as indicated at block 97. "New" purchase order entries are those which have not previously been transmitted as indicated by flags in the files in which the information is stored in memory 43. Upon completion of the transfer, the program returns to the main menu 19 as indicated by the tags "A". The purchase order document generating program is exited by selection of "RETURN TO D.O.S." (disc operating system) from the main menu 19. This results in closing of the P.C. system as indicated at block 99.

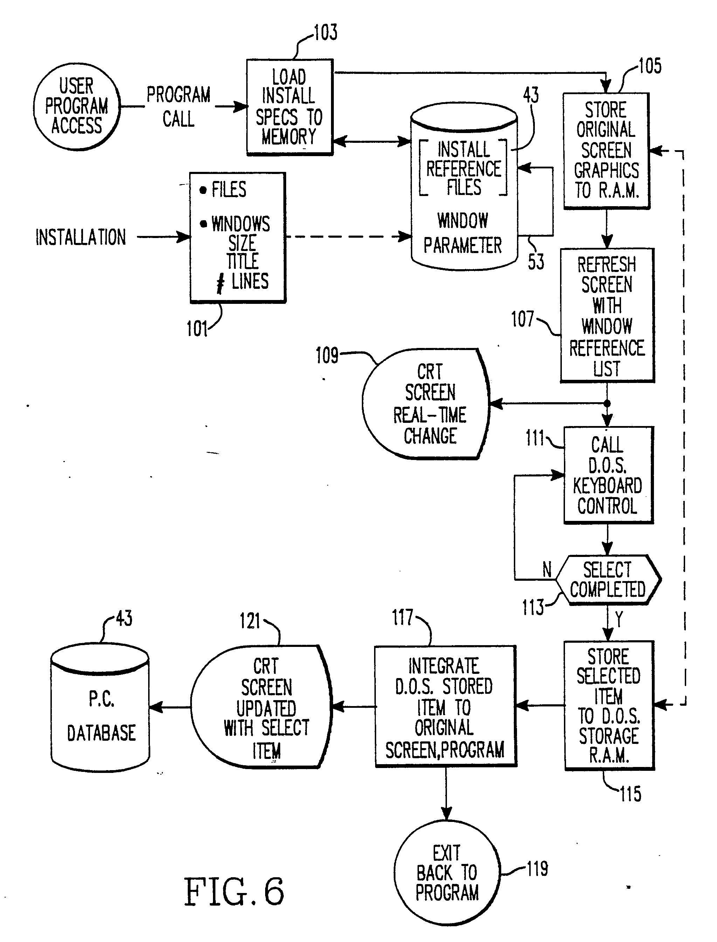

The process by which the rule base lists, such as the vendor lists, shown in Figure 3, are presented to the user is shown in more detail in Figure 6. Upon installation of the program, files customized to the user are set up for the information to be presented in the rule base lists as indicated at block 101. The window size, the title and the number of lines to be presented are also specified at installation. These files and window parameters are stored on the purchase order data disc 43. When the main program calls for a list, the pertinent information and window parameters are called from the memory disc 43 and loaded into P.C. memory as indicated at block 103. The original screen graphics presented at the time the list is called for are stored in the P.C.'s random access memory (RAM) as indicated at block 105, for recall at a later time. The original screen graphics are also retained in the P.C. memory where they are refreshed with the window containing a selected reference list as indicated at block 107. This is accomplished by mapping the window to the screen. Methods of overlaying such a window on a screen are well known in the programming art. The original screen with the overlaid list is presented in real time to the user as indicated at 109. A call is then made to the D.O.S. keyboard control routine as indicated at block 111. This routine enables the user to select the desired entry from the list using, for instances, the arrow keys on the keyboard 13 as discussed above. When the selection is completed through pressing of the enter key by the user as indicated at block 113, the selected item is stored in the RAM with the original screen graphics as indicated at block 115. This selected item is then integrated into the stored original screen as indicated at block 117. The selected item is also entered into the main program which records the entries made by the user before the routine is exited at block 119. The screen updated with the selected items is presented to the user at block 121 and the data is stored in the P.C. data base 43.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the appended claims and any and all equivalents thereof.

Page 13-1                                                    54,046

IDENTIFICATION OF REFERENCE NUMERALS USED IN THE DRAWINGS

| LEGEND | REF. NO. | FIGURE |
|---|---|---|
| TSO DATA | | |
| CORPORATE DATA | 3 | 1B |
| 103 | 6 | 6 |
| P.C. MENU | 17 | 1A |
| P.C. SECURITY VALIDATION | 21 | 1A |
| PASSWORD CHECK | 23 | 1A |
| SECURITY | | |
| P.C. DATA | | |
| MAINFRAMES | 25 | 1B |
| P.O. NO. ENTRY | 39 | 1A |
| NEW P.O. NO. | 41 | 1A |
| P.C. PURCHASE ORDER DATA | 43 | 1B |
| P.C. DATABASE | 43 | 6 |
| ⎡ INSTALL ⎤ REFERENCE ⎣ FILES ⎦ | | |
| WINDOW | | |
| PARAMETER | 43 | 6 |
| VENDOR RULE BASE | 51 | 1B |
| RULE BASE LIST VENDORS | 53 | 1B |
| VENDOR NAME ENTRY | 55 | 1B |
| P.O. NO. DATE ENTRY | 57 | 1B |
| TEMPLATE USE | 59 | 1B |
| RULE BASE LIST | 61 | 1B |
| P.O. HEADER AND ITEM ENTRY | 63 | 1B |
| ADD TEMPLATE | 65 | 1B |
| FORMAT TEMPLATE ENTRY ADDITION | 67 | 1B |
| RULE BASE TEMPLATES | 69 | 1B |
| FORMAT DATA ENTRY | 71 | 1B |
| TEMPLATE LIST SELECTION | 75 | 1B |
| RETRIEVE (SELECTED) TEMPLATE | 76 | 1B |
| EDIT TEMPLATE | 77 | 1B |
| P.O. NO. ENTRY | 79 | 1A |

7

Page 13-2                                         54,046

IDENTIFICATION OF REFERENCE NUMERALS USED IN THE DRAWINGS

| LEGEND | REF. NO. | FIGURE |
|---|---|---|
| P.O. NO. ON FILE | 81 | 1A |
| RETRIEVE P.O. DATA ● CHANGE DATA | 83 | 1B |
| P.O. NO. ENTRY | 85 | 1A |
| P.O. NO. ON FILE | 87 | 1A |
| RETRIEVE P.O. DATA ● DELETE DATA | 89 | 1B |
| ERASE SECURE CLEAR | 91 | 1A |
| MAINFRAME SECURITY VALIDATION | 91 | 1A |
| PASSWORD CHECK | 95 | 1A |
| TRANSMIT "NEW" P.O. ENTRIES | 97 | 1A |
| P.C. SYSTEM CLOSE | 99 | 1A |
| ● FILES | | |
| ● WINDOWS | | |
|    SIZE | | |
|    TITLE | | |
|    # LINES | 101 | 6 |
| STORE ORIGINAL SCREEN GRAPHICS TO R.A.M. | 105 | 6 |
| REFRESH SCREEN WITH WINDOW REFERENCE LIST | 107 | 6 |
| CRT SCREEN REAL-TIME CHANGE | 109 | 6 |
| CALL D.O.S. KEYBOARD CONTROL | 111 | 6 |
| SELECT COMPLETED | 113 | 6 |
| STORE SELECTED ITEM TO D.O.S. | | |
|    STORAGE R.A.M. | 115 | 6 |
| INTEGRATE D.O.S. STORED ITEM TO | | |
|    ORIGINAL SCREEN, PROGRAM | 117 | 6 |
| EXIT BACK TO PROGRAM | 119 | 6 |
| CRT SCREEN UPDATED WITH SELECT ITEM | 121 | 6 |

## Claims

1. A system for generating purchasing documents in a mainframe computer 1 having rigid coded input requirements, said system comprising personal computer 7 having a visual display screen 11 and a user input device 13, characterized in that there are means 33 to present on the visual display screen 11 suggested items for inclusion in a purchasing document, means 15 to sequentially indicate on said visual display screen items on said purchasing document requiring user entries, a window 47 on said visual display screen 11 adjacent certain 109 said indicated items, a list 103 of selectable entries presented in user readable form within the window 47 for said certain indicated item, a visual representation 121 of the selected selectable entry generated on said display screen 11 in response to a user selection of a selectable entry through said user input device 13 and a coded input 71 generated for entry into said mainframe computer 1 to the rigid coded input requirements of said mainframe computer 1.

2. The system of claim 1 wherein, said personal computer 7 having coded input 71 generated the entry into the mainframe computer to the rigid input requirements of the mainframe computer 1 further characterized in having means 43 to store the mainframe computer 1 coded input for later entry into the mainframe computer 1 on command.

3. The system of claim 1 wherein, said personal computer system 7 having a window 109 on said display device further characterized by including means 107 to overlay said window 47 containing said list of selectable entries on part of said screen 11 such that the indicated item and adjacent items remain substantially visible.

4. The system of claim 1 wherein, said personal computer 7 having a fixed window 35 with a list 61 of selectable entries on the display screen adjacent certain indicated items and a removable window 47 which overlays a portion of the display screen adjacent other indicated items further characterized in that additional items on said display screen adjacent said other indicated items are still substantially visible.

5. The system of claim 1 wherein, said personal computer 7 further characterized in having a removable window 47 which overlays a portion of the display screen 11 adjacent said indicated items but without completely obscuring any other of said items on the display screen 11.

6. The system of claim 1 wherein, said personal computer 7 further characterized in having templates 65, 67 generated from previously generated purchase documents having previously selected user entries for some items requiring user entries and having no entries in designated other entries requiring user entries, said templates stored 69 in said personal computer 7 with a user selected identifying code, means 75, 76 to copy a stored template in response to a user selected identifying code and present said copied template on said display screen 11 such that entries 77 can be added through the user input device 13 to the items requiring user entries to generate a new purchase document which can be stored as a new purchase document 43 for entry in the mainframe computer 1.

FIG.1A

FIG.1B

EP 0 338 770 A2

INPUT ACTION DESIRED: ☐ ←------- A - ADD NEW PURCHASE ORDER
C - EDIT PURCHASE ORDER
D - DELETE
X - WORK COMPLETE

PURCHASE ORDER NUMBER : ←--- MN | 12345 | M | ------
LOCATION | REG.# | CLASS |

VENDOR CODE: ←-- ? FOR LIST

PURCHASE DATE:10/28/87 ←---- ENTER MO DAY YEAR
NO SPACES: eg.01/01/87

## FIG.2

INPUT ACTION DESIRED: [A] ←------- A - ADD NEW PURCHASE ORDER
C - EDIT PURCHASE ORDER
D - DELETE
X - WORK COMPLETE

PURCHASE ORDER NUMBER :[MN12345M] ←--- IBMCORPM01
A&BSMITM01
STD OFFM01
HEWLETTM15
QUADRAMM03

VENDOR CODE:[ _ _ _ ] ←--? FOR LIST

PURCHASE DATE:10/28/87 ←--- ENTER MO DAY YEAR
NO SPACES: eg.01/01/87

PRESENTATION OF RULE BASE

## FIG.3

—27

INPUT ACTION DESIRED: [A] <——————— | A — ADD NEW PURCHASE ORDER
C — EDIT PURCHASE ORDER
D — DELETE
X — WORK COMPLETE

PURCHASE ORDER NUMBER : MN12345M <——— | MN | 12345 | M |
LOCATION | REG.# | CLASS |

VENDOR CODE: IBMCORPM01 <—— ? FOR LIST

PURCHASE DATE: 10/28/87 <——— | ENTER MO DAY YEAR
NO SPACES: eg.01/01/87

SELECTION,INSERTION

FIG. 4

—73

CROSBY VALUE SERVICE
CLEANING SERVICES
BLANKET ORDER TOOLS

—27

TEMPLATE SELECTION

FIG. 5

FIG.6